# FASCICULE DE BREVET EUROPEEN

(11) **EP 0 690 186 B1**
(45) Date de publication et mention de la délivrance du brevet: **06.05.1999**
(21) Numéro de dépôt: 95420169.5
(22) Date de dépôt: 27.06.1995
(51) Int. Cl.: E04F 15/18, B32B 27/12

(54) **Revêtement isolant pour la pose de chapes liquides**
Isolierende Beschichtung zum Verlegen von flüssigen Estrichen
Insulating coating for laying liquid coverings

(30) Priorité: 28.06.1994 FR 9408241
(43) Date de publication de la demande: 03.01.1996
(73) Titulaire: PARQUET PARCHET, 74380 Cranves-Sales (FR)
(72) Inventeur: Parchet, René, F-74380 Cranves-Sales (FR)
(74) Mandataire: Vuillermoz, Bruno

(56) Documents cités:
- EP-A- 0 472 436
- CH-A- 428 151
- US-A- 4 800 119

## Description

### Domaine technique

L'invention concerne un nouveau matériau isolant destiné à être mis en place sur le sol, préalablement à la pose de chapes - anhydrite.

### Art antérieur

De façon générale, il est connu par exemple du document CH-A-428 151, avant la coulée d'une chape de béton, de mettre en place sur la dalle un matériau isolant. Ce matériau isolant, généralement du polystyrène expansé ou élastifié, remplit deux fonctions principales. D'une part il sert d'isolant thermique, empêchant les déperditions de chaleur à travers le sol, et d'autre part, il remplit le rôle d'isolant phonique en absorbant une partie des vibrations sonores.

Malheureusement, l'interposition de cet isolant étanche limite la vitesse de séchage de la chape, ce qui rallonge les temps de réalisation. En outre, lors du séchage de la chape, il peut apparaître des fissures dues à la mauvaise répartition de l'humidité et des différences de prise en différentes zones de la chape.

### Exposé de l'invention

L'objet de l'invention est de pallier ces différents inconvénients.

L'invention concerne un revêtement isolant thermique et/ou phonique destiné à être mis en place préalablement au coulage de chapes comprenant une couche de matériau connu pour ses fonctions d'isolation thermique et phonique, notamment de polystyrène expansé élastifié.

Elle se caractérise en ce que sur la couche de matériau isolant est fixé un complexe comprenant, sur la face en contact dudit matériau isolant, un film de polyoléfine et sur l'autre face, en contact avec la chape, un non tissé.

En d'autres termes, l'invention consiste à combiner l'utilisation d'un isolant thermique et/ou phonique avec l'utilisation d'un complexe, dont la partie non tissée homogénéise l'humidité sur toute la surface de la chape. Par cette combinaison on évite les problèmes de fissuration et paradoxalement, la durée de séchage de la chape est considérablement réduite.

Dans une forme pratique de réalisation, le complexe est collé sur le matériau isolant.

Avantageusement, en pratique le complexe est un feutre dont la masse est comprise entre cent et mille grammes par metre carré (100 et 1000 g/m²) solidarisé à une feuille de polyéthylène.

### Description sommaire des dessins

La manière dont l'invention peut être réalisée et les avantages qui en découlent ressortiront mieux de l'exemple de réalisation qui suit, donné à titre indicatif et non limitatif à l'appui de la figure unique annexée.

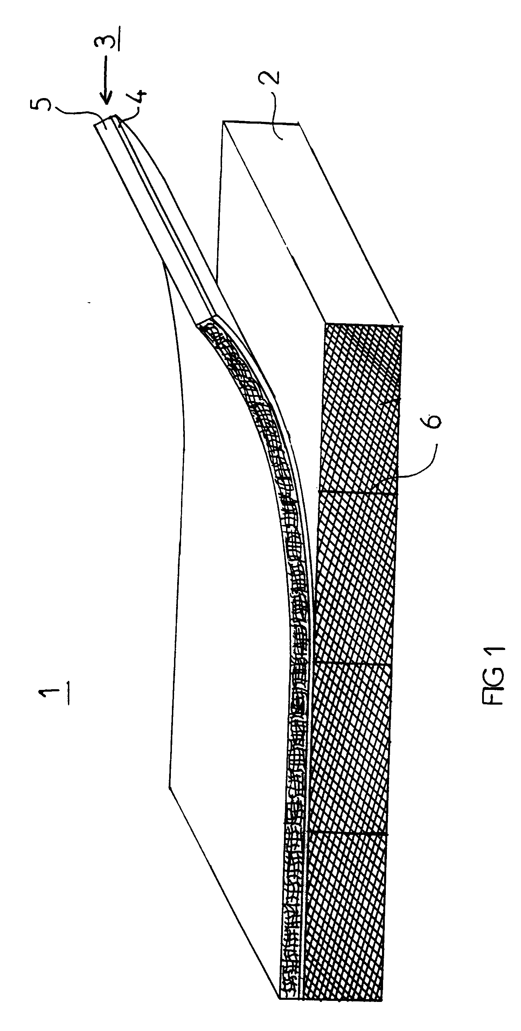

La figure 1 est une représentation schématique en coupe du revêtement isolant conforme à l'invention.

### Mode de réalisation l'invention

L'utilisation de l'invention se fait de la manière suivante.

Sur une dalle de béton constituant un plancher d'habitation, on prévoit de couler une chape anhydrite de synthèse pour obtenir un état de surface suffisamment lisse pour permettre la pose de moquette, de plancher ou de carrelages.

Auparavant, on pose sur la dalle le matériau de revêtement (1). Ce matériau de revêtement est constitué sur une face, par une couche de polystyrène élastifié (2) dont l'épaisseur est comprise entre 10 et 40 millimètres, et commercialisé sous la dénomination "GOROLL T/SE" ou "GOROLL F20" par la société GONON. Cette face est posée sur la dalle de béton.

Le choix du polystyrène se fait en fonction des caractéristiques d'isolation recherchées. Un polystyrène de forte densité est un bon isolant thermique alors qu'un polystyrène de faible densité est un bon isolant phonique.

Sur l'autre face du matériau de revêtement (1), est fixé un complexe (3) constitué par l'assemblage d'un film de polyéthylène (4) et d'un feutre (5) de masse 100 g/m².

Le polystyrène (1) se présente lors du stockage, sous forme d'une bande continue, présentant des découpes partielles (6), propres à permettre son stockage sous forme de bobines. Le film en polyéthylène (4) du complexe (3) est collée sur le polystyrène (2), de sorte que l'ensemble peut être conditionné sous forme de rouleaux.

Après avoir couvert la surface du sol avec le matériau isolant muni du complexe (3), la face en polystyrène (2) est en contact avec la dalle, et le feutre (5) est donc prêt à recevoir la chape. Juste avant de couler la chape, on humidifie par arrosage le feutre (5), de manière à éviter lors du coulage de la chape, l'absorption par capillarité par le feutre de l'eau, contenue dans la chape.

Le séchage de la chape se fait de manière uniforme sur toute sa surface.

Le feutre (5), grâce aux fibres qu'il contient, permet également un certain ancrage de la chape, une fois solidifiée.

En outre, la structure amortissante du feutre augmente le pouvoir d'isolant phonique du matériau de revêtement (1).

En conclusion, l'invention présente des avantages jusqu'alors recherchés, à savoir qu'il permet une bonne isolation thermique et phonique, un séchage rapide et surtout une bonne résistance à la fissuration de la chape.

## Revendications

1. Revêtement isolant (1) thermique et/ou phonique destiné à être mis en place préalablement au coulage d'une chape et comprenant une couche (2) de matériau connu pour ses fonctions d'isolation thermique et phonique, notamment de polystyrène élastifié, ***caractérisé*** en ce que sur la couche (2) est fixé un complexe (3) comprenant, sur la face en contact dudit matériau isolant (2), un film de polyoléfine (4) et sur l'autre face, destinée à être en contact avec la chape, un non tissé (5).

2. Revêtement selon la revendication 1, ***caractérisé*** en ce que le complexe (3) est collé sur la couche (2).

3. Revêtement selon l'une des revendications 1 à 2, ***caractérisé*** en ce que le non tissé (5) est collé sur le film de polyoléfine (4) pour constituer le complexe (3).

4. Revêtement selon l'une des revendications 1 à 3, **caractérisé** en ce que le non tissé (5) est un feutre.

5. Revêtement selon la revendication 4, ***caractérisé*** en ce que le feutre (5) a une masse comprise entre cent et mille grammes par mètre carré.

6. Revêtement selon l'une des revendications 1 à 5, ***caractérisé*** en ce que le film de polyoléfine (4) est constitué par du polyéthylène.

## Patentansprüche

1. Wärme- und/oder schallisolierender Belag (1), der dazu bestimmt ist, vor dem Vergießen eines Estrichs aufgebracht zu werden, und der eine Schicht (2) aus einem für seine wärme- und schallisolierenden Funktionen bekannten Material umfaßt, insbesondere aus elastifiziertem Polystyrol, **dadurch gekennzeichnet**, daß auf der Schicht (2) ein Verbundstoff (3) befestigt ist, welcher auf der mit dem genannten Isoliermaterial (2) in Berührung stehenden Seite einen Polyolefin-Film (4) und auf der anderen Seite, welche dazu bestimmt ist, mit dem Estrich in Berührung zu stehen, ein Vlies (5) umfaßt.

2. Belag nach Anspruch 1, **dadurch gekennzeichnet**, daß der Verbundstoff (3) auf die Schicht (2) geklebt ist.

3. Belag nach einem der Ansprüche 1 bis 2, **dadurch gekennzeichnet**, daß das Vlies (5) auf den Polyolefin-Film (4) geklebt ist, um den Verbundstoff (3) zu bilden.

4. Belag nach einem der Ansprüche 1 bis 3, **dadurch gekennzeichnet**, daß das Vlies (5) ein Filz ist.

5. Belag nach Anspruch 4, **dadurch gekennzeichnet**, daß die Masse des Filzes (5) zwischen hundert und tausend Gramm pro Quadratmeter liegt.

6. Belag nach einem der Ansprüche 1 bis 5, **dadurch gekennzeichnet**, daß der Polyolefin-Film (4) aus Polyethylen besteht.

## Claims

1. Thermally- and/or sound-insulating coating (1) intended to be set in place prior to the pouring of a covering and comprising a layer (2) of material that is known for its thermal- and sound-insulation functions, particularly elasticated polystyrene, characterized in that attached to the layer (2) is a complex (3) which, on the face in contact with the said insulating material (2) comprises a film of polyolefin (4), and on the other face intended to be in contact with the covering, comprises a nonwoven (5).

2. Coating according to Claim 1, characterized in that the complex (3) is bonded to the layer (2).

3. Coating according to one of Claims 1 and 2, characterized in that the nonwoven (5) is bonded to the film of polyolefin (4) to form the complex (3).

4. Coating according to one of Claims 1 to 3, characterized in that the nonwoven (5) is a felt.

5. Coating according to Claim 4, characterized in that the felt (5) has a mass of between one hundred and one thousand grams per square metre.

6. Coating according to one of Claims 1 to 5, characterized in that the film of polyolefin (4) consists of polyethylene.
